# EUROPEAN PATENT APPLICATION

(11) **EP 2 863 323 A1**
(43) Date of publication of application: **22.04.2015**
(21) Application number: 14181554.8
(22) Date of filing: 20.08.2014
(51) Int. Cl.: G06F 17/30

(54) **Apparatus for and method of managing image files by using thumbnail images**

(30) Priority: 21.10.2013 KR 20130125548
(71) Applicant: Samsung Electronics Co., Ltd, Gyeonggi-do 443-742 (KR)
(72) Inventor: Seo, Hyun-doc, Gyeonggi-do (KR); Lee, In-sik, Gyeonggi-do (KR); Hwang, Soon-hoon, Gyeonggi-do (KR)
(74) Representative: Appleyard Lees

(57) **Abstract**

Provided are apparatuses and methods for managing an image file by using a thumbnail image. The method includes: sharing the image file stored in a first apparatus with a second apparatus; determining whether the image file stored in the first apparatus is shared with the second apparatus or not; and reducing the size of the image file stored in the first apparatus by deleting the original image comprised in the image file stored in the first apparatus based on the determination result.

## Description

### BACKGROUND

### 1. Field

One or more embodiments of the present disclosure relate to apparatuses for and methods of managing an image file by using a thumbnail image.

### 2. Related Art

The development of electronic apparatuses enables taking high definition images having a large size. Images taken by an electronic apparatus may be readily shared with another apparatus by using various methods (for example, sharing between apparatuses, social network services (SNS), and cloud services, etc.).

However, although an image stored in an electronic apparatus is copied to another apparatus, the same image file remains simultaneously in several storing spaces because the original file is stored until the original file is deleted by the user. That is, apparatuses having a limited storing space store the same image file, and thus, storing spaces are wasted.

The copied image file may be simply deleted in order to prevent wasting of storing spaces. However, in this case, it is inconvenient to read an image file that is copied from the electronic apparatus.

Accordingly, there is a need to develop a technique for efficiently managing a storing space when image files are shared.

### SUMMARY

One or more embodiments of the present disclosure include apparatuses and methods for managing an image file by using a thumbnail image when an image file is shared. Thus, a storing space, in which the image file is stored, may be efficiently utilized, and a convenience of using an image file may be provided to the user by storing a thumbnail image even though an image taken by an electronic apparatus is shared. Additional features will be set forth in part in the description below and, in part, will be apparent from the description, or may be learned by practice of the presented embodiments. According to the present invention there is provided an apparatus and method as set forth in the appended claims. Other features of the invention will be apparent from the dependent claims, and the description which follows.

According to one or more embodiments, a method of managing an image file that includes a thumbnail image, an original image, and exchangeable image file format (Exif) information, includes: sharing an image file stored in a first apparatus with a second apparatus; determining whether the image file stored in the first apparatus is shared with the second apparatus or not; and reducing the size of the image file stored in the first apparatus by deleting the original image in the image file stored in the first apparatus based on the determination result.

The sharing of the image file may include copying or backing-up of the image file stored in the first apparatus to the second apparatus.

The reducing of the size of the image file may include: generating a table that includes information related to the original image to be deleted; and inserting the table into the image file.

The table may include at least one of: a name of the image file; identifiers of apparatuses on which the image file is shared; an image size of the deleted original image; or a date when the image file is shared.

The determining of whether the image file stored in the first apparatus is shared with the second apparatus or not may include determining via the first apparatus whether the image file stored in the first apparatus exists as another image file on the second apparatus or not by receiving a receive completion signal of the image file from the second apparatus.

The determining of whether the image file stored in the first apparatus is shared with the second apparatus or not may include determining via the second apparatus whether the image file stored in the first apparatus exists as another image file on the second apparatus or not by receiving the image file and image file information from the first apparatus.

The reducing of the image file may include controlling the first apparatus via the second apparatus to delete the original image included in the image file stored in the first apparatus.

The method may further include determining whether a storing capacity of the first apparatus is below a predetermined value before reducing the size of the image file stored in the first apparatus, and the reducing of the size of the image file comprises reducing the size of the image file stored in the first apparatus when the storing capacity of the first apparatus is below a predetermined value.

According to one or more embodiments, an image file managing apparatus for managing an image file that includes a thumbnail image, an original image, and Exif information, includes: a file sharing unit that shares the image file stored in a first apparatus with a second apparatus; a determination unit that determines whether an image file stored in the first apparatus is shared with the second apparatus or not; and a reduction unit that reduces the size of the image file stored in the first apparatus by deleting the original image in the image file stored in the first apparatus based on the determination result.

The file sharing unit may copy or back-up the image file stored in the first apparatus to the second apparatus.

The reduction unit may generate a table that includes information related to the original image to be deleted, and may insert the table into the image file.

The table may include at least one of: a name of the image file; identifiers of apparatuses on which the image file is shared; an image size of the deleted original image; or a date when the image file is shared.

The determination unit may determine whether the image file stored in the first apparatus is the same as the image file shared with the second apparatus or not.

The reduction unit may reduce the size of the image file stored in the first apparatus when the storing size of the first apparatus is below a predetermined value.

The image file managing apparatus may include the first apparatus.

The image file managing apparatus may include the second apparatus.

According to one or more embodiments, a non-transitory computer readable recording medium has embodied thereon a program for executing, with a processor, a method for managing an image file that comprises a thumbnail image, an original image, and exchangeable image file format (Exif) information. The method includes: sharing an image file stored in a first apparatus with a second apparatus; determining whether the image file stored in the first apparatus is shared with the second apparatus or not; and reducing the size of the image file stored in the first apparatus by deleting the original image in the image file stored in the first apparatus based on the determination result. The sharing of the image file may include copying or backing-up the image file stored in the first apparatus to the second apparatus.

The reducing of the size of the image file may include: generating a table that comprises information related to the original image to be deleted; and inserting the table into the image file.

The table may include at least one of: a name of the image file; identifiers of apparatuses on which the image file is shared; an image size of the deleted original image; or a date when the image file is shared.

### BRIEF DESCRIPTION OF THE DRAWINGS

These and/or other embodiments will become apparent and more readily appreciated from the following description of various embodiments, taken in conjunction with the accompanying drawings in which:
FIG. 1 is a schematic perspective view showing a sharing of an image file stored in an electronic apparatus;
FIG. 2 is a block diagram of an apparatus that manages an image file by using a thumbnail image, according to an embodiment;
FIG. 3 a block diagram of a configuration of an image file according to an embodiment;
FIG. 4 is a block diagram of a modified configuration of an image file according to an embodiment;
FIG. 5 shows examples of tables to be inserted into a revised image file according to an embodiment;
FIG. 6 is a flowchart of a method of managing an image file by using a thumbnail image, according to an embodiment;
FIG. 7 is a diagram of managing an image file by using a thumbnail image, according to an embodiment;
FIG. 8 is a diagram of managing an image file by using a thumbnail image, according to another embodiment; and
FIG. 9 is a diagram of managing an image file by using a thumbnail image, according to another embodiment.

### DETAILED DESCRIPTION

Reference will now be made in detail to various embodiments, examples of which are illustrated in the accompanying drawings. In describing the current specification, "unit" or "module" denotes a unit that processes one or more functions or operations, and may be implemented by hardware, software, or a combination of hardware and software. Also, in the current specification, "an embodiment" or "embodiments" denotes one or more characteristics, structures, or features described together as an embodiment. However, the characteristics, structures, or features may be included in other combinations or embodiments. Therefore, the term "an embodiment" or "embodiments" in the current specification does not necessarily denote the same embodiment (s).

In the embodiments described herein, the terms "communication", "a communication network", and "a network" may be used as the same meaning. The three terms denote data transmission networks that can receive and transmit an image file between an electronic apparatus, a server, a personal computer, and a mobile terminal on a short distance or long distance with wires or wirelessly.

In the embodiments described herein, the term "share" may be defined to include all operations of "copying" or "backing-up" from an apparatus in which an image file is stored to another apparatus.

Various embodiments will now be described with reference to accompanied drawings.

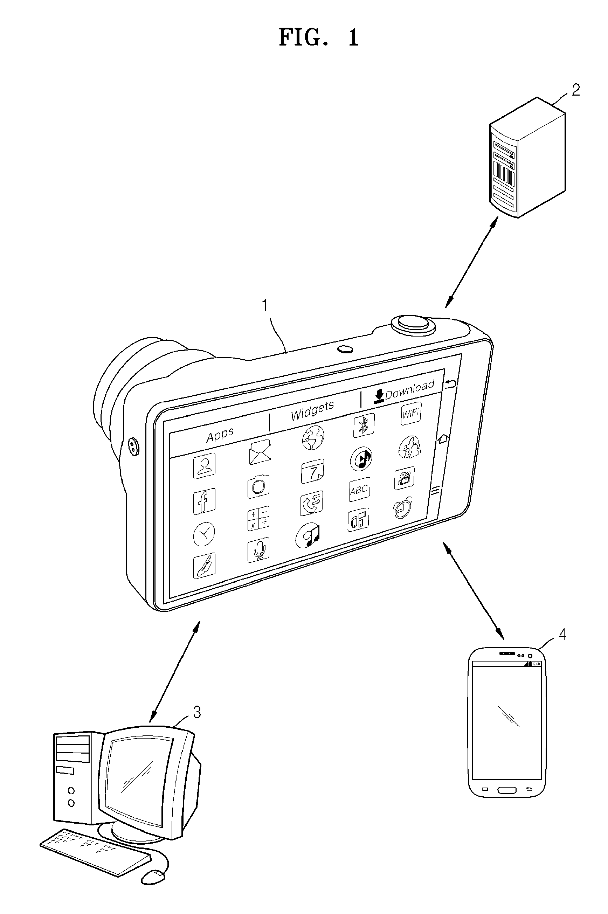

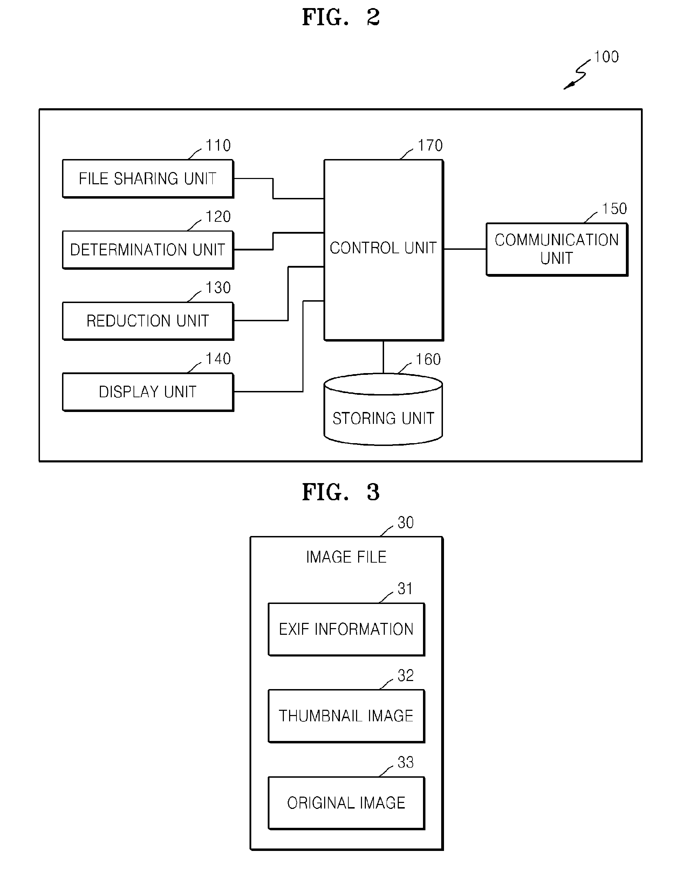

FIG. 1 is a schematic perspective view showing a sharing of an image file 30 (FIG. 3) stored in an electronic apparatus 1.

Referring to FIG. 1, the electronic apparatus 1 takes an image and generates an image file 30, and may share the generated image file 30 with one or more of a server 2, a personal computer (PC) 3, or a mobile device 4 by directly or indirectly transmitting the image file 30 (e.g., via wired or wireless transmission).

Here, the electronic apparatus 1 may include a digital single-lens reflex (DSLR) camera, a mirrorless camera, a smartphone, or other electronic apparatus. However, the configuration of the electronic apparatus 1 is not limited thereto, and the electronic apparatus 1 may be implemented by other apparatuses on which a camera module that includes a lens and an image capturing device is mounted to generate an image by taking a picture of an object.

An image generated by the electronic apparatus 1 may further include a thumbnail image and exchangeable image file format (Exif) information.

Here, the thumbnail image denotes an image reduced (e.g., in size or resolution) to index the original image. A more rapid indexing and processing is achieved by displaying a thumbnail image that is generated from an original image by reducing a resolution or size of the original image instead of searching for the original image that has a large size.

Also, the Exif information denotes information about an image file 30 that is stored in the image file 30 of the electronic apparatus 1. The Exif information may include detailed additional information, such as manufacturer and model identification of the electronic apparatus 1, an image editor (e.g., software), the date and time when the image is corrected, an Exif version, the date and time of capture, the size of an actual image uploaded to another location (e.g., on the Internet), an exposure time (shutter speed), an exposure program, a focal length, an F-number, the use of flash, etc. together with image data according to a set-up made in advance.

Accordingly, an image generated according to the shooting operation of the electronic apparatus 1 may be stored as an image file 30 (see FIG. 3) that includes a thumbnail image, an original image, and Exif information.

An apparatus 100 (see FIG. 2) that manages an image file 30 by using a thumbnail image according to the current embodiment may be an electronic apparatus 1 or may be included as a module that performs an operation in the electronic apparatus 1, which will be described below.

The server 2 according to the current embodiment may provide a cloud service or a social network service. Accordingly, the electronic apparatus 1 may share an image file 30 through the cloud service or the social network service. For example, the user may upload an image file 30 to the cloud service or the social network service by using a wireless communication network. In this case, the size of the image file 30 to be uploaded may be changed according to a regulation that is set by a service provider that operates the cloud service, the social network service, or the wireless communication network.

The PC 3 according to the current embodiment may share photos stored in the electronic apparatus 1 through a wireless network or a wireline network. In this case, the electronic apparatus 1 is used generally as a storage device, and thus, the PC 3 may perform an operation of managing an image file 30 by using the thumbnail image, as described below.

The mobile device 4 according to the current embodiment may receive a sharing of an image captured by the electronic apparatus 1. The mobile device 4 may directly receive an image through a wireless communication network, and also, may indirectly receive an image file 30 by connecting to a cloud service or a social network service through the server 2.

The mobile device 4 may be a notebook, a mobile phone, a tablet PC, or smartphone, but is not limited thereto. That is, the configuration of the mobile device 4 may include a communication module, such as a code division multiplexing access (CDMA) module, a Bluetooth module, an infrared data association module, or a wire/wireless LAN card. The mobile device 4 thus may be understood to be mobile communication terminal capable of performing predetermined computing operations with a microprocessor that may perform a multimedia reproduction function.

When an image file 30 is shared according to the method described herein, the same image file 30 may be stored in many locations (e.g., multiple copies of the image file 30). That is, storing spaces of apparatuses that have a limited storing capacity are less efficiently utilized because the same image file 30 is redundantly stored in many locations. Therefore, a method of managing an image file 30 by using a thumbnail image will now be described with reference to FIGS. 2 through 8.

FIG. 2 is a block diagram of the apparatus 100 that manages an image file 30 by using a thumbnail image, according to an embodiment.

Referring to FIG. 2, the apparatus 100 that manages an image file 30 by using a thumbnail image (hereinafter, an image file managing apparatus 100) may include a file sharing unit 110, a determination unit 120, a reduction unit 130, a display unit 140, a communication unit 150, a storing unit 160, and a control unit 170.

The image file managing apparatus 100 depicted in FIG. 2 includes various elements related to the current embodiment. Accordingly, one of ordinary skill in the art will understand that the image file managing apparatus 100 may further include other elements that are not shown in FIG. 2 for clarity.

The file sharing unit 110 according to the current embodiment may share an image file 30 stored in a first apparatus with a second apparatus. Here, the first apparatus according to the current embodiment may correspond to the electronic apparatus 1 depicted in FIG. 1. Also, the second apparatus may correspond to one of the server 2, the PC 3, or the mobile device 4.

More specifically, the sharing unit 110 may copy or back-up an image file 30 stored in the first apparatus to the second apparatus based on a user input.

Also, the file sharing unit 110 may copy or back-up an image file 30 stored in the first apparatus to the second apparatus according to predetermined conditions. Here, the predetermined conditions may include a time and frequency set in advance, and may be a case when a network is connected. For example, an image file 30 stored in the electronic apparatus 1 may be shared with a cloud server whenever the electronic apparatus 1 is connected to a cloud server through a wireless network (e.g., a Wi-Fi network).

FIG. 3 is a block diagram of a configuration of the image file 30 according to an embodiment.

Referring to FIG. 3, the image file 30 stored in the first apparatus, according to the current embodiment, may include Exif information 31, a thumbnail image 32, and an original image 33.

Here, the Exif information 31 denotes image file information stored in an image file 30 of the electronic apparatus 1. The Exif information 31 may include detailed additional information, such as the manufacturer and model identification of the electronic apparatus 1, an image editor (e.g., software), a date and time when the image is corrected, an Exif version, a date and time of capture, the size of an actual image uploaded on the Internet (e.g., to the cloud service or social network service), an exposure time (a shutter speed), an exposure program, a focal length, an F-number, the use of flash, etc. together with image data according to a set-up made in advance. Here, the thumbnail image 32 may denote a reduced image of the original image 33. Accordingly, a rapid indexing and processing may be possible by displaying the thumbnail image 32 that is a generated from the original image 33 by reducing a resolution or size (or both) of the original image 33 instead of searching for the original image 33 that has a large size.

The original image 33 may denote the original data obtained by the electronic apparatus 1. The image quality, size, and resolution of the original image 33 may vary according to specifications of the electronic apparatus 1. The original image 33 may be stored in a compressed file type according to a tagged image file format (TIFF), joint photograph experts group (JPEG) standard, or other image compression technique.

Referring to FIG. 3 again, the determination unit 120 may determine whether the image file 30 stored in the first apparatus is shared with the second apparatus or not. Here, the determination includes whether operations of copying or backing-up of an image file 30 have been performed.

For example, the image file 30 stored in the electronic apparatus 1 according to the current embodiment may be shared with the server 2 by using a cloud service or a social network service. At this point, the determination unit 120 included in the electronic apparatus 1 may determine whether the image file 30 on the electronic apparatus 1 is shared by determining whether the same image file 30 exists in both the electronic apparatus 1 and the server 2.

Here, the determination unit 120 determines whether the same image file 30 exists in both the electronic apparatus 1 and the server 2 or not because, in the case of the cloud service or the social network service, an image resizing is performed to share the image file 30 according to a set-up provided by the service provider. That is, the reduction unit 130, which will be described below, reduces the size of the image file 30 by deleting the shared original image 33. However, since the original image 33 should not be deleted after the original image 33 is resized, the determination unit 120 needs to determine whether the original image 33 is copied in the server 2 or not.

In order to perform an image resizing, there are generally two cases: 1) if the file sharing unit 110 shares a resized file, or 2) if the file sharing unit 110 shares the original image 33, the server 2 resizes the shared original image 33 and stores the resized image. In the former case, the determination unit 120 may determine whether the image is resized or not. However, in the latter case, it is difficult for the determination unit 120 to determine whether the image file 30 is stored in the server 2 or not after resizing is performed.

Accordingly, the determination unit 120 may store a plan or indication in advance regarding whether a resizing will be performed or not according to the service provider. When the image file 30 is shared, the determination unit 120 may determine whether the original image file 30 is shared or not by determining the service provider. Alternatively, the determination unit 120 may determine whether the original image file 30 is shared or not by comparing the size of the image file 30 stored in the server 2 and that of the image file 30 stored in the electronic apparatus 1.

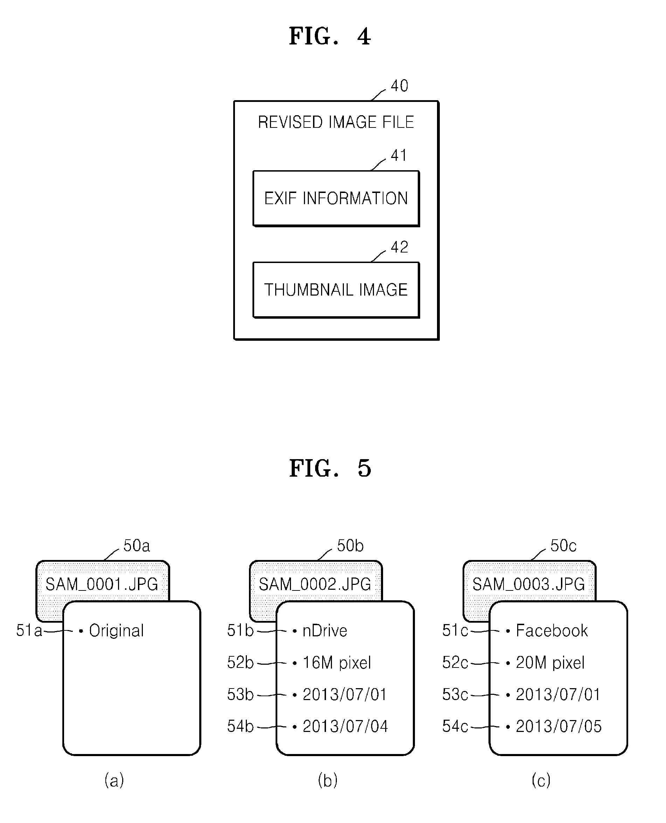

As another example, the user may share an image file 30 stored in the electronic apparatus 1 through a universal serial bus (USB) connection with the PC 3. At this point, the electronic apparatus 1 may perform simply as a storage unit. In this case, the PC 3 may include the determination unit 120 of the image file managing apparatus 100. Thus, according to the current embodiment, the PC 3 may determine whether the image file 30 stored in the electronic apparatus 1 is shared or not by determining whether the same image file 30 exists in the electronic apparatus 1 or not (e.g., whether the electronic apparatus 1 contains a copy of the image file 30). Also, the PC 3 may provide the determination result to the electronic apparatus 1 or may perform an operation of generating a revised image file 40 (FIG. 4), which will be described below. When the electronic apparatus 1 shares an image file 30 with the mobile terminal 4, a similar operation as with the server 2 or the PC 3 may be performed in the mobile terminal 4. Accordingly, a description of the electronic apparatus 1 sharing an image file 30 with the mobile terminal 4 is omitted.

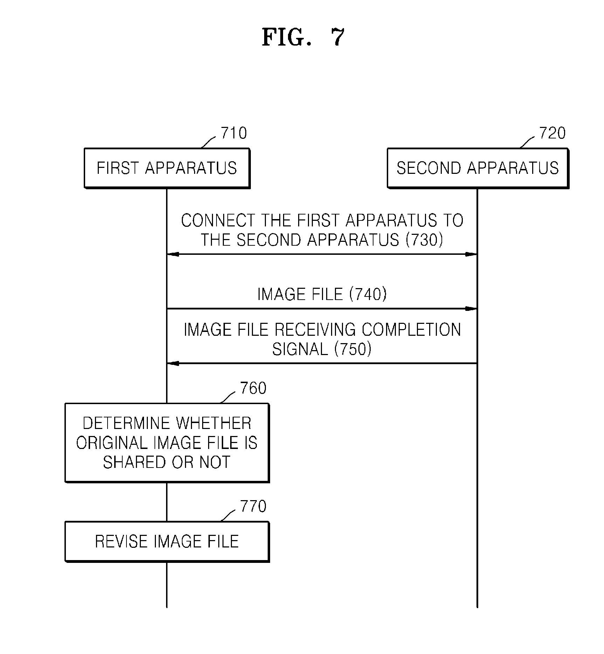

Hereinafter, practical operations of the determination unit 120 according to the second apparatus will be described with reference to FIGS. 7, 8, and 9.

The reduction unit 130 may reduce the size of an image file 30 by deleting an original image 33 included in the image file 30 stored in the first apparatus based on the determination result of the determination unit 120. That is, an image file 30 having a reduced size may be generated by deleting the original image 33 from the image file 30 (hereinafter, a revised image file 40).

FIG. 4 is a block diagram of a revised image file 40 as a modified configuration of an image file 30 according to an embodiment.

Referring to FIG. 4, the revised image file 40 may include only Exif information 41 and a thumbnail image 42 and the original image is omitted.

For example, when it is determined that an image file 30 has been shared from the first apparatus to the second apparatus, the reduction unit 130 may delete the original image 33 of the first apparatus to prevent the waste of storage capacity being duplicated copies in a plurality of apparatuses. However, if the image file 30 itself is deleted, the user needs to identify apparatuses where the image file 30 is shared when the user wants to later see the original image 33 taken by the electronic apparatus 1. Therefore, from the image file 30, the revised image file 40 may be generated by deleting the original image 33. The size of an image file 30 is mostly occupied by the original image 33, and thus, a storing space may be reclaimed through an operation of deleting the original image 33 (see FIG. 3) in an image file 30.

In order to provide an indication of the fact that the image file 30 is shared by the operations described above and the history of the revision of the original image 33 to the user, the reduction unit 130 may insert a table into the revised image file 40 when the original image 33 is deleted.

Here, the table may include one or more of a name of an image file, names or identifiers of apparatuses that share the image file, an image size of a deleted original image, a sharing date of the image file, and a revised date. Accordingly, after the original image 33 is deleted, it is possible for the user to identify where the original image 33 is stored (e.g., which apparatus stores an image file 30 containing the original image 33).

FIGS. 5(a), 5(b), and 5(c) show examples of tables 50 to be inserted into an image file 30 or a revised image file 40 according to an embodiment.

FIG. 5(a) shows a table 50a that is inserted into an image file 30 that is not shared with other apparatuses. FIGS. 5(b) and 5(c) show tables 50b and 50c, respectively, that are inserted into image files that are shared with other apparatuses by using predetermined services, respectively.

Referring to FIG. 5(a), in the image file 30 that is not shared, an original indication is recorded in a storing location 51 a of the table 50a.

However, referring to FIGS. 5(b) and 5(c), in revised image files 40 that are shared and revised, the tables 50b and 50c include the storing locations 51b and 51 c, a size of the original images 52b and 52c, sharing dates of the image files 53b and 53c, and revision dates 54b and 54c as shown in FIGS. 5(b) and 5(c), for example, in the order described above from the top.

The tables 50a, 50b, and 50c described above may be inserted into and stored in the Exif information 41 (see FIG. 4) of the revised image files 40.

Referring to FIG. 2 again, the display unit 140 according to the current embodiment may include an element for visually displaying an image on a screen of a liquid crystal display (LCD) or a light-emitting diode (LED) display. In the display unit 140, the thumbnail image 42 of the revised image file 40 may be displayed.

The communication unit 150 according to the current embodiment may include a network interface card (NIC) or a modem, and allows the image file managing apparatus 100 to share an image file 30 with other apparatuses through communication. Also, the communication unit 150 may receive a determination result whether an original image file 30 is shared or not from other apparatuses.

The storing unit 160 according to the current embodiment may store an image file (e.g., image file 30 or revised image file 40). Here, the storing unit 160 may be configured by using a non-volatile, non-transitory storing medium that stores digital data, such as a hard disc drive (HDD) or a flash memory.

The control unit 170 according to the current embodiment may control the file sharing unit 110, the determination unit 120, the reduction unit 130, the display unit 140, the communication unit 150, and the storing unit 160 so that the image file managing apparatus 100 performs operations as described above.

The image file managing apparatus 100 is described as an independent apparatus for convenience of explanation. However, the image file managing apparatus 100 may correspond to at least one of the first and second apparatuses, or may be a module that performs the operations described above by being included in at least one of the first and second apparatuses.

Hereinafter, an operation of the image file managing apparatus 100 will be described in detail.

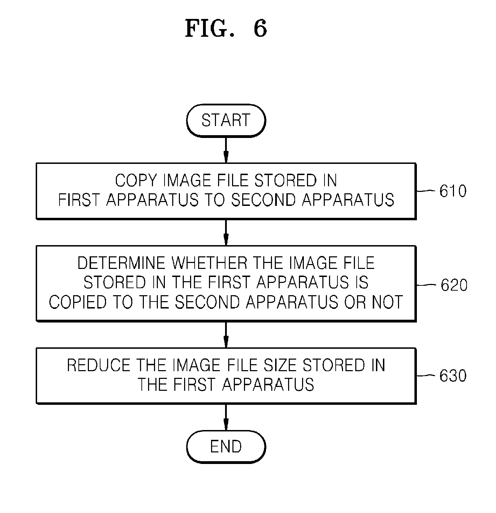

FIG. 6 is a flowchart of a method of managing an image file 30 by using a thumbnail image, according to an embodiment.

Referring to FIG. 6, the method of managing an image file 30 by using a thumbnail image includes operations that are time sequentially processed in the image file managing apparatus 100 depicted in FIG. 2. Accordingly, it will be understood that the descriptions of the image file managing apparatus 100 depicted in FIG. 2 apply to the method described with reference to FIG. 6 although omitted.

In operation 610, the file sharing unit 110 according to the current embodiment may share an image file 30 stored in the first apparatus according to the current embodiment with the second apparatus (e.g., copying the image file 30 to the second apparatus). Here, the first apparatus according to the current embodiment may correspond to the electronic apparatus 1 depicted in FIG. 1. Also, the second apparatus according to the current embodiment may correspond to one of the server 2, the PC 3, or the mobile terminal 4 depicted in FIG. 1.

In operation 620, the determination unit 120 may determine whether the image file 30 stored in the first apparatus is shared with or copied to the second apparatus or not. Here, the sharing may include copying or backing-up the image file 30.

In operation 630, the reduction unit 130 according to the current embodiment may reduce the size of the image file 30 by reducing or removing an original image 33 included in the image file 30 stored in the first apparatus. That is, the original image 33 is deleted and a thumbnail image 32 is stored, and thus, a revised image file 40, in which the size of the revised image file 40 is reduced, is generated.

In order to provide a notification of a history of deleting the shared original image 33 to the user, the reduction unit 130 according to the current embodiment may insert a table into the revised image file 40 when the original image 33 is deleted, and thus, the image file 30 may be managed.

As described above, the method of managing an image file, according to the current embodiment, allows the image file managing apparatus 100 to effectively use the storing spaces by deleting an original image 33 of a shared image file 30 and may provide convenience by storing a thumbnail image 32 even though the original image 33 is shared in an electronic apparatus.

FIG. 7 is a diagram showing an example of managing an image file 30 by using a thumbnail image, according to an embodiment.

In FIG. 7, when a first apparatus 710 shares an image file 30 with a second apparatus 720, the first apparatus 710 may revise an original image file 30 by determining whether the original image file 30 is copied or not. Here, the first apparatus 710 is the electronic apparatus 1 and the second apparatus 720 may be the server 2 that provides a cloud service or a social network service. In other embodiments, the second apparatus 720 may be the mobile terminal 4.

In operation 730, if the first apparatus 710 is connected to the second apparatus 720 via a wireline network or a wireless network, the second apparatus 720 may provide information of the second apparatus 720 to the first apparatus 710.

In operation 740, the first apparatus 710 transmits an image file 30 to the second apparatus 720, and in operation 750, the second apparatus 720 transmits a signal of completely receiving the image file 30 to the first apparatus 710, and thus, the sharing of the image file 30 is completed.

In operation 760, the first apparatus 710 may determine whether an original image file 30 is shared or not. Here, the reason why the first apparatus 710 determines whether an original image file 30 is shared with the second apparatus 720 or not is because, in the case of the cloud service or the social network service, image resizing is performed to share the image file 30 according to a set-up provided by the service provider.

There are two cases of sharing the resized image: A first case is sharing an image file 30 resized by the first apparatus 710, and a second case is that when the file sharing unit 110 shares the original image file 30, the server 2 resizes the shared original image file 30 and stores the resized file (e.g., the resized image) but not the original image 33. In the first case, the first apparatus 710 may itself determine whether the original image 33 is resized or not. However, in the second case, it is difficult for the first apparatus 710 itself to determine whether the original image 33 stored in the second apparatus 720 has been resized by the second apparatus 720.

Accordingly, in the second case, in order to determine whether the original image 33 is resized or not, the first apparatus 710 may store a policy indicating whether a resizing of the original image 33 is performed or not according to the service provider, and may determine whether this case corresponds to the first case or the second case based on received information of the second apparatus 720.

Also, according to another embodiment, the first apparatus 710 may determine whether a first image file 30 is shared or not through an additional operation of comparing the first image file 30 of the first apparatus 710 with a second image file 30 of the second apparatus 720.

In operation 770, when it is determined that a first image file 30 stored in the first apparatus 710 is shared with the second apparatus 720, the first image file 30 may be revised. That is, the size of the first image file 30 may be reduced by deleting the original image 33 stored in the first image file 30. Also, information regarding the image file revision may be inserted in a table form which is described above with reference to FIG. 5.

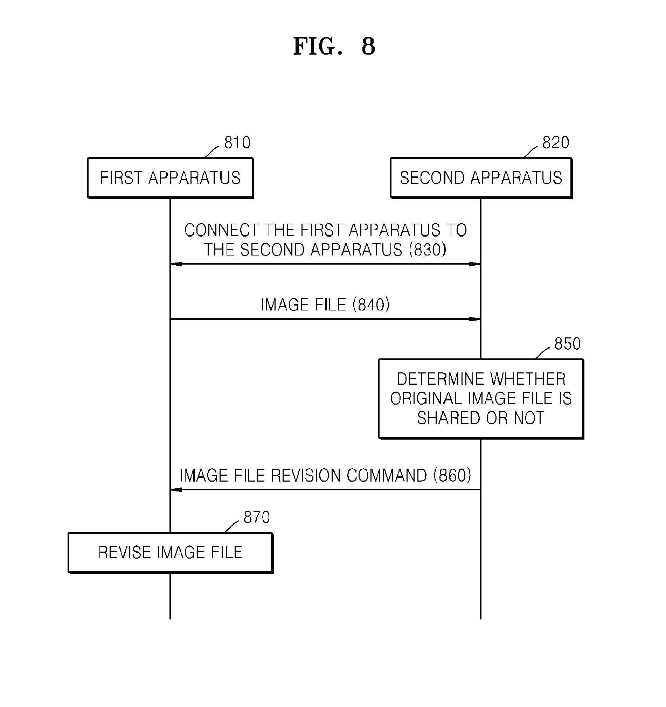

FIG. 8 is a diagram of managing an image file by using a thumbnail image, according to another embodiment.

In FIG. 8, if the first apparatus 810 shares a first image file 30 with the second apparatus 820, the second apparatus 820 may determine whether the first image file 30 is copied or not.

Here, the first apparatus 810 may be the electronic apparatus 1, and the second apparatus 820 may be the PC 3 or the mobile terminal 4.

For example, the user may share a first image file 30 stored in the electronic apparatus 1 with the PC 3 through a USB connection. At this point, the electronic apparatus 1 may perform only as a storing apparatus and not as an image file managing apparatus 100. In this case, the PC 3 may revise the first image file 30 stored in the electronic apparatus 1. Thus, according to the current embodiment, the PC 3 may determine whether the image file 30 stored in the electronic apparatus 1 is shared or not by determining whether the original image 33 exists in the electronic apparatus 1 or not. Also, the PC 3 may provide the determination result to the electronic apparatus 1 or may perform an operation of generating a revised image file 40, which will be described below.

In operation 830, if the first apparatus 810 is connected to the second apparatus 820 through a wireline or wireless connection, in operation 840, the first apparatus 810 may share a first image file 30 with the second apparatus 820.

At this point, if the first apparatus 810 performs only as a storing apparatus (e.g., not as an image file managing apparatus 100), it is difficult for the first apparatus 810 itself to identify whether the first image file 30 stored in the first apparatus 810 is shared with the second apparatus 820 or not. Accordingly, in operation 850, the second apparatus 820 may determine whether the first image file 30 is shared or not, and in operation 860, may transmit an image file revision command to the first apparatus 810.

Accordingly, in operation 870, the first apparatus 810 may revise the image file 30 when the first apparatus 810 receives the image file revision command.

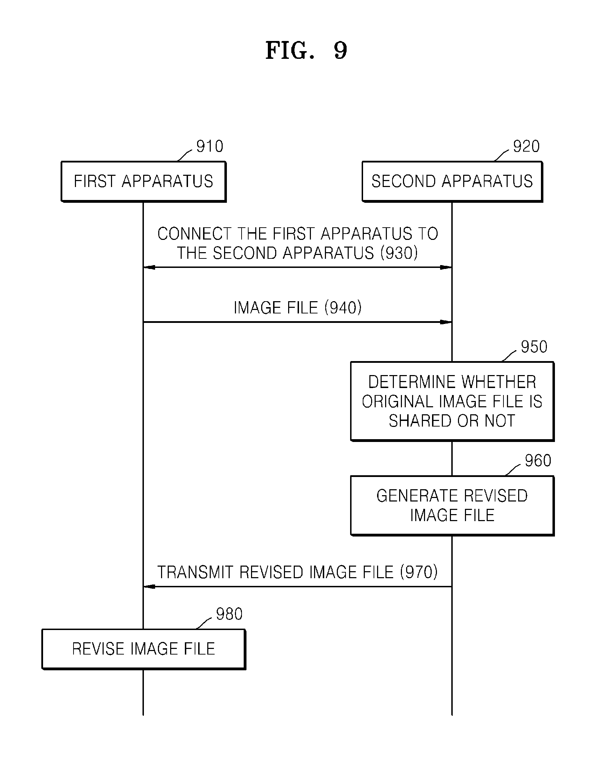

FIG. 9 is a diagram of managing an image file by using a thumbnail image, according to another embodiment.

The method of managing an image file depicted in FIG. 9 is similar to that of managing an image file depicted in FIG. 8. In FIG. 9, in operation 830, if the first apparatus 910 is connected to the second apparatus 920 through a wireline or wireless connection, in operation 940, the first apparatus 810 may share a first image file 30 with the second apparatus 820. When the first apparatus 910 shares the first image file 30 with a second apparatus 920 and thus receives a second image file 30, the second apparatus 920 may determine that the second image file 30 is a copy of a first image file 30 and may directly revise the first image file 30. That is, since the first apparatus 910 performs only as a storing apparatus (and not as an image file managing apparatus 100), in operation 960, the second apparatus 920 generates a revised image file 40, and in operation 970, the revised image file 40 may be transmitted to the first apparatus 910.

Accordingly, in operation 980, the second image file 30 stored in the first apparatus 910 is replaced by the revised image file 40, and thus, the storing space of the first apparatus 910 is effectively managed.

In some embodiments, the image file managing apparatus 100 determines whether a storing capacity of the first apparatus 710 is below a predetermined value before reducing the size of the image file stored in the first apparatus 710. The image file managing apparatus 100 reduces the size of the image file stored in the first apparatus 710 when the storing capacity of the first apparatus 710 is below a predetermined value. All references, including publications, patent applications, and patents, cited herein are hereby incorporated by reference to the same extent as if each reference were individually and specifically indicated to be incorporated by reference and were set forth in its entirety herein.

For the purposes of promoting an understanding of the principles of the invention, reference has been made to the embodiments illustrated in the drawings, and specific language has been used to describe these embodiments. However, no limitation of the scope of the invention is intended by this specific language, and the invention should be construed to encompass all embodiments that would normally occur to one of ordinary skill in the art. The terminology used herein is for the purpose of describing the particular embodiments and is not intended to be limiting of exemplary embodiments of the invention. In the description of the embodiments, certain detailed explanations of related art are omitted when it is deemed that they may unnecessarily obscure the essence of the invention.

The apparatus described herein may comprise a processor, a memory for storing program data to be executed by the processor, a permanent storage such as a disk drive, a communications port for handling communications with external devices, and user interface devices, including a display, touch panel, keys, buttons, etc. When software modules are involved, these software modules may be stored as program instructions or computer readable code executable by the processor on a non-transitory computer-readable media such as magnetic storage media (e.g., magnetic tapes, hard disks, floppy disks), optical recording media (e.g., CD-ROMs, Digital Versatile Discs (DVDs), etc.), and solid state memory (e.g., random-access memory (RAM), read-only memory (ROM), static random-access memory (SRAM), electrically erasable programmable read-only memory (EEPROM), flash memory, thumb drives, etc.). The computer readable recording media may also be distributed over network coupled computer systems so that the computer readable code is stored and executed in a distributed fashion. This computer readable recording media may be read by the computer, stored in the memory, and executed by the processor.

Also, using the disclosure herein, programmers of ordinary skill in the art to which the invention pertains may easily implement functional programs, codes, and code segments for making and using the invention.

The invention may be described in terms of functional block components and various processing steps. Such functional blocks may be realized by any number of hardware and/or software components configured to perform the specified functions. For example, the invention may employ various integrated circuit components, e.g., memory elements, processing elements, logic elements, look-up tables, and the like, which may carry out a variety of functions under the control of one or more microprocessors or other control devices. Similarly, where the elements of the invention are implemented using software programming or software elements, the invention may be implemented with any programming or scripting language such as C, C++, JAVA®, assembler, or the like, with the various algorithms being implemented with any combination of data structures, objects, processes, routines or other programming elements. Functional aspects may be implemented in algorithms that execute on one or more processors. Furthermore, the invention may employ any number of conventional techniques for electronics configuration, signal processing and/or control, data processing and the like. Finally, the steps of all methods described herein may be performed in any suitable order unless otherwise indicated herein or otherwise clearly contradicted by context. For the sake of brevity, conventional electronics, control systems, software development and other functional aspects of the systems (and components of the individual operating components of the systems) may not be described in detail. Furthermore, the connecting lines, or connectors shown in the various figures presented are intended to represent exemplary functional relationships and/or physical or logical couplings between the various elements. It should be noted that many alternative or additional functional relationships, physical connections or logical connections may be present in a practical device. The words "mechanism", "element", "unit", "structure", "means", and "construction" are used broadly and are not limited to mechanical or physical embodiments, but may include software routines in conjunction with processors, etc. The use of any and all examples, or exemplary language (e.g., "such as") provided herein, is intended merely to better illuminate the invention and does not pose a limitation on the scope of the invention unless otherwise claimed. Numerous modifications and adaptations will be readily apparent to those of ordinary skill in this art without departing from the scope of the invention as defined by the following claims. Therefore, the scope of the invention is defined not by the detailed description of the invention but by the following claims, and all differences within the scope will be construed as being included in the invention.

No item or component is essential to the practice of the invention unless the element is specifically described as "essential" or "critical". It will also be recognized that the terms "comprises," "comprising," "includes," "including," "has," and "having," as used herein, are specifically intended to be read as open-ended terms of art. The use of the terms "a" and "an" and "the" and similar referents in the context of describing the invention (especially in the context of the following claims) are to be construed to cover both the singular and the plural, unless the context clearly indicates otherwise. In addition, it should be understood that although the terms "first," "second," etc. may be used herein to describe various elements, these elements should not be limited by these terms, which are only used to distinguish one element from another. Furthermore, recitation of ranges of values herein are merely intended to serve as a shorthand method of referring individually to each separate value falling within the range, unless otherwise indicated herein, and each separate value is incorporated into the specification as if it were individually recited herein.

## Claims

1. A method of managing an image file that comprises a thumbnail image, an original image, and exchangeable image file format (Exif) information, the method comprising:
sharing an image file stored in a first apparatus with a second apparatus;
determining whether the image file stored in the first apparatus is shared with the second apparatus or not; and
reducing the size of the image file stored in the first apparatus by deleting the original image in the image file stored in the first apparatus based on the determination result.

2. The method of claim 1, wherein the sharing of the image file comprises copying or backing-up the image file stored in the first apparatus to the second apparatus.

3. The method of claim 1 or 2, wherein the reducing of the size of the image file comprises:
generating a table that comprises information related to the original image to be deleted; and
inserting the table into the image file.

4. The method of claim 3, wherein the table comprises at least one of: a name of the image file; identifiers of apparatuses on which the image file is shared; an image size of the deleted original image; or a date when the image file is shared.

5. The method of any preceding claim, wherein the determining of whether the image file stored in the first apparatus is shared with the second apparatus or not comprises determining via the first apparatus whether the image file stored in the first apparatus exists as another image file on the second apparatus or not by receiving a receive completion signal of the image file from the second apparatus.

6. The method of any one of claims 1-5, wherein the determining of whether the image file stored in the first apparatus is shared with the second apparatus or not comprises determining via the second apparatus whether the image file stored in the first apparatus exists as another image file on the second apparatus or not by receiving the image file and image file information from the first apparatus.

7. The method of any preceding claim, wherein the reducing of the image file comprises controlling the first apparatus via the second apparatus to delete the original image included in the image file stored in the first apparatus.

8. The method of any preceding claim, further comprising determining whether a storing capacity of the first apparatus is below a predetermined value before reducing the size of the image file stored in the first apparatus, and the reducing of the size of the image file comprises reducing the size of the image file stored in the first apparatus when the storing capacity of the first apparatus is below a predetermined value.

9. An image file managing apparatus for managing an image file that comprises a thumbnail image, an original image, and Exif information, the apparatus comprising:
a file sharing unit that shares the image file stored in a first apparatus with a second apparatus;
a determination unit that determines whether an image file stored in the first apparatus is shared with the second apparatus or not; and
a reduction unit that reduces the size of the image file stored in the first apparatus by deleting the original image in the image file stored in the first apparatus based on the determination result.

10. The image file managing apparatus of claim 9, wherein the file sharing unit copies or backs up the image file stored in the first apparatus to the second apparatus.

11. The image file managing apparatus of claim 9 or 10, wherein the reduction unit generates a table that includes information related to the original image to be deleted, and inserts the table into the image file.

12. The image file managing apparatus of claim 11, wherein the table comprises at least one of: a name of the image file; identifiers of apparatuses on which the image file is shared; an image size of the deleted original image; or a date when the image file is shared.

13. The image file managing apparatus of any one of claims 9-12, wherein the determination unit determines whether the image file stored in the first apparatus is the same as the image file shared with the second apparatus or not.

14. The image file managing apparatus of any one of claims 9-13, wherein the reduction unit reduces the size of the image file stored in the first apparatus when the storing capacity of the first apparatus is below a predetermined value.

15. The image file managing apparatus of any one of claims 9-14, wherein the image file managing apparatus comprises the first apparatus or the second apparatus.
